# EUROPÄISCHE PATENTSCHRIFT

(11) **EP 0 703 844 B1**
(45) Veröffentlichungstag und Bekanntmachung des Hinweises auf die Patenterteilung: **12.06.2002**
(21) Anmeldenummer: 95913072.5
(22) Anmeldetag: 09.03.1995
(51) Int. Cl.: B23D 31/00, F16C 9/04

(54) **VORRICHTUNG ZUM BRUCHTRENNEN VON LAGERDECKELN FLUCHTEND ANGEORDNETER LAGERBOHRUNGEN IN LAGERANORDNUNGEN EINES MASCHINENTEILS**
DEVICE FOR BREAKING SEPARATION OF BEARING CAPS OF ALIGNED BEARING BORES IN BEARING SYSTEMS OF A PART OF AN ENGINE
DISPOSITIF POUR LA SEPARATION PAR RUPTURE DE CHAPEAUX DE PALIER D'ALESAGES DE PALIER ALIGNES DANS DES ENSEMBLES PALIER D'UNE PARTIE DE MOTEUR

(30) Priorität: 16.04.1994 DE 4413255
(43) Veröffentlichungstag der Anmeldung: 03.04.1996
(73) Patentinhaber: Bayerische Motoren Werke Aktiengesellschaft, 80788 München (DE)
(72) Erfinder: WIESEMANN, Johann, D-80992 München (DE); LUCHNER, Clemens, D-81673 München (DE)
(86) Internationale Anmeldenummer: EP9500875
(87) Internationale Veröffentlichungsnummer: WO9528248

(56) Entgegenhaltungen:
- EP-A- 0 167 320
- WO-A-88/06942
- US-A- 5 274 919

## Beschreibung

Die Erfindung geht gemäß dem Oberbegriff des Patentanspruches 1 von der US 4,684,267 aus.

Diese bekannte, für mehrere Lageranordnungen eines Kurbelgehäuses einer Hubkolbenmaschine anwendbare Vorrichtung dient der stufenweisen Bruchtrennung der mit dem Kurbelgehäuse einstückig gegossenen Lagerdeckel. Diese . bekannte Bruchtrenn-Vorrichtung umfaßt hierfür einen in die Lagerbohrung mehrerer Lageranordnungen einführbaren zylindrischen Stützkörper mit im Abstand der Lageranordnungen vorgesehenen, quer gerichteten Einschnitten zur jeweils geführten Anordnung eines etwa in Form einer halben Scheibe gestalteten Trennelementes. In Längserstreckung mittig vorgesehene Ausnehmungen in Stützkörper und Trennelementen dienen der Aufnahme einer Betätigungsstange für die Trennelemente. Die mit einem Energiespeicher wirkverbundene Betätigungsstange weist den Trennelementen zugeordnete Keilflächen auf zur radialen Verlagerung der Trennelemente in den Lagerbohrungen zur Erzeugung der Bruchtrennkräfte.

Nachteilig bei dieser bekannten Vorrichtung mit einer vom Betätigungsgestänge gesonderten Führung jedes Trennelementes ist der im Verhältnis zur Summe aller Bruchtrennkräfte hohe Reibkraftanteil, der neben einem entsprechend groß dimensionierten Energiespeicher auch einen Mehraufwand an Energie verursacht. Die an den Keilflächenpaaren von Betätigungsstange und Trennelementen wirksamen Reibkräfte führen ferner in der bekannten Vorrichtung zu unterschiedlich verteiltem Verschleiß, was einem vorteilhaften, quasi einstufigem Brechvorgang bei jedem Lagerdeckel entgegensteht. Vielmehr ergibt sich ein zeitlich versetztes Brechen der Lagerdeckel mit daraus resultierenden Bruchtrennflächen unterschiedlicher Qualität, weil für später brechende Lagerdeckel die unveränderte Gesamtbruchtrennkraft sich auf wenige, restliche Lagerdeckel verteilt. Weiter werden bei diesem bekannten Bruchtrenn-Verfahren die Lagerdeckel zunächst und zwar ungesteuert einseitig vom Kurbelgehäuse bruchgetrennt und für das Bruchtrennen die bruchgetrennte Seite jedes Lagerdeckels zur Vermeidung eines Biegebruches durch aufwendige zusätzliche Maßnahmen, z.B. mittels Schrauben, drehgesichert.

Eine Vorrichtung zum Bruchtrennen von Lagerdeckeln mit einem relativ günstigen Verhältnis des Reibkraftanteiles der Vorrichtung zur aufzubringenden Bruchtrennkraft ist aus der EP-B 0 396 797 bekannt. Bei dieser zum Bruchtrennen von Pleuel-Lagerdeckeln dienenden Vorrichtung ist das Betätigungsgestänge eine fallende Schlagmasse zur Einwirkung auf einen geführten Schlitten, an dem ein die Lagerdeckel des drehgesichert gehaltenen Pleuels durchsetzender, an beiden Enden mit dem Schlitten fest verbundener Halbdorn angeordnet ist. Der geführte Schlitten dient hierbei der Führung des auf den Lagerdeckel zum Bruchtrennen einwirkenden Halbdornes.

Nachteilig bei dieser Vorrichtung mit ebenfalls vom Betätigungsgestänge gesonderter Führung des bruchtrennwirksamen Halbdornes ist, daß die als Betätigungsgestänge wirkende Schlagmasse beim Auftreffen auf den gestoßenen, der Führung des Halbdornes dienenden Schlitten aufgrund der Materialelastizitäten zurückfedert und somit Schlagmasse und Schlitten während des Bruchtrennvorganges nicht konstant gleichgerichtet wirken. In nachteiliger Weise können Bruchflächen entstandener Anrisse schwingend aufeinanderschlagen und Materialausbrechungen verursachen.

Schließlich ist aus der US 4,754,906 eine weitere dem Bruchtrennen eines Pleuel-Lagerdeckels dienende Vorrichtung mit einer vom Betätigungsgestänge gesonderten Führung für einen bruchtrennwirksamen Halbdorn bekannt. Dieser in einem Gestell relativ beweglich angeordnete Halbdorn ist hydraulisch beaufschlagt. Er umfaßt für ein hydraulisches Betätigungsgestänge eine Kammer, in die ein gegen einen am Gestell feststehend angeordneten Halbdorn abgestützter, kolbenartiger Fortsatz als Träger einer Abdichtung eingreift.

Der relativ massige, bruchtrennwirksame Halbdorn ist gestellseitig geführt über zum kolbenartigen Kammer-Fortsatz bzw. zur Ebene der Bruchtrennkraft-Einleitung beabstandete Führungsflächen. Diese Anordnung erscheint insbesondere mit zunehmenden Verschleiß der Führungsflächen kritisch, da beim kraftgesteuerten Anschlagen des Halbdornes gegen die Lagerbohrung einer Pleuel-Lageranordnung eine mit zusätzlicher Reibung behaftete Schiefstellung nicht auszuschließen ist. Eine Schiefstellung beeinflußt die Bruchtrennung aber nachteilig.

Schließlich ist aus der US 5,274, 919 eine Pleuel-Bruchtrenn-Vorrichtung bekannt, bei der auf einen unteren Halbdorn einwirkende Stempeln als Betätigungsgestänge für diesen Halbdorn den oberen, balkenartigen Halbdorn geführt durchsetzen. Diese Anordnung hat zum einen den Nachteil, dass bei einer elastischen Durchbiegung des oberen Domes bzw. Halbdornes die in diesem geführten Stempeln klemmen können, und zum anderen ist ein wesentlicher Nachteil darin zu sehen, dass für das Einbringen der Stempeln in den Durchbrechungen des oberen Dornes dieser maschinell exakt zugestellt werden muss, um eine Zerstörung der Vorrichtung zu vermeiden.

Der Erfindung liegt die Aufgabe zugrunde, eine Vorrichtung zum Bruchtrennen derart zu gestalten, daß ein rela-tiv geringer Reibungskraftanteil über eine lange Gebrauchsdauer der Vorrichtung durch eine einfachere Vorrichtungs-Struktur niedrig bleibt, und daß diese Struktur bei relativ geringem Platzbedarf einen gewünscht massiven Aufbau der Vorrichtung ermöglicht für eine aus einem jeweiligen Energiespeicher schlagartig freisetzbare Kraft, die als aktive Kraft auf den abzutrennenden Lagerdeckel unmittelbar einwirkend bestimmt ist für eine einwandfreie einstufige Bruchtrennung eines mittels der Vorrichtung drehgesichert gehaltenen Lagerdeckels.

Diese Aufgabe ist durch eine Vorrichtung mit der Merkmale des Patentanspruchs 1 gelöst.

Die erfinderische Kombination der kennzeichnenden Merkmale ergibt in vorteilhafter Weise eine einfachere Struktur der Vorrichtung, wobei die einfachere Struktur gegenüber dem angegebenen Stand der Technik erfindungswesentlich durch ein am jeweiligen Dorn quer zu seiner Längserstreckung in Bruchtrenn-Richtung angreifendes, kombiniertes Betätigungs-/Führungs-Gestänge erzielt ist. Durch die erfindungsgemäße Integration der für eine einwandfreie Bruchtrennung erforderlichen Dorn-Führung mit dem Betätigungsgestänge reduziert sich die Anzahl an reibungsbehafteten Führungsflächen erheblich. Der Vorteil ist ein im Verhältnis zur Bruchtrennkraft geringer, vom Energiespeicher aufzubringender Reibkraftanteil. Dies hat den weiteren Vorteil eines kleiner bauenden Energiespeichers und durch den geringeren Reibungsverlust für eine schlagartige Krafteinleitung einen fast senkrechten Kraftanstiegsverlauf bei entsprechender Wahl eines Energiespeichers vorteilhaft zur Folge.

Mit der Wahl eines Energiespeichers in der bevorzugten Ausführung einer Kolben-Zylinder-Einheit mit einer einen Abschnitt des Betätigungsgestänges bildenden Kolbenstange ist in weiterer vorteilhafter Weise ein einfacher Aufbau der erfindungsgemäßen Struktur dadurch erreicht, daß die zylinderseitig gerad geführte Kolbenstange der Gerad-Führung des jeweiligen Dornes in Bruchtrenn-Richtung dient. Diese gegenüber dem Stand der Technik erfindungsgemäß ein Minimum an Führungsflächen aufweisende Bruchtrenn-Vorrichtung kann in ihrer Struktur unabhängig von der Anzahl der bruchzutrennenden Lagerdeckel neben einem einfachen Aufbau vorteilhaft massiv für ein einstufiges Bruchtrennen ausgeführt werden.

Ein insbesondere massiv ausgeführtes Betätigungsgestänge kann vorteilhaft zur drehsichernden Anordnung des jeweiligen Bruchtrenn-Dornes dienen. Das massiv gestaltete Betätigungsgestänge ermöglicht in weiterer vorteilhafter Weise die Anordnung einer gesteuert betätigten Klemmeinrichtung für einen Lagerdeckel, wobei die Klemmeinrichtung vor dem Bruchtrennen am zugeordneten Lagerdeckel derart zur Anlage gebracht ist, daß der Lagerdeckel zwischen Klemmeinrichtung und jeweiligem Bruchtrenn-Dorn während und nach dem Bruchtrennen zur Vermeidung eines Biegebruches in einem zuletzt brechenden Trennbereich drehgesichert geklemmt ist.

Das erfindungsgemäß kombinierte, gerad geführte Betätigungs-/Führungs-Gestänge mit relativ zu diesem drehgesicherten Bruchtrenn-Dorn und relativ zum Bruchtrenn-Dorn drehgesichert klemmbaren Lagerdeckeln zeichnet sich damit vorteilhaft durch Vermeidung von Einflüssen aus, die im Betrieb der Vorrichtung für das einstufige Bruchtrennen nachteilig sein können (Schiefstellung, große Spiele, Werkstoffelastizitäten).

Neben der bevorzugten Kolben-Zylinder-Einheit sind als Energiespeicher zur Bruchauslösung bei entsprechender Verspannkraft auch Fallgewichte denkbar, und weiter ist ein abgewandeltes Betätigungsgestänge mit einer kinematisch gesondert bewirkten Geradführung seiner Verbindungsstelle mit dem jeweiligen Bruchtrenn-Dorn vorstellbar.

Für eine bei kompakter Bauweise massiv aufgebauten Bruchtrenn-Vorrichtung ist eine hydraulische Kolben-Zylinder-Einheit als Energiespeicher bevorzugt, mit der eine gewünscht hohe Vorspannkraft sowie mittels hydraulischer Übersetzung eine schlagartig freisetzbare Bruchtrennkraft verwirklicht werden können.

Vorteilhafte Ausgestaltungen der Erfindung sind in weiteren Unteransprüchen beschrieben. Diese beschreiben insbesondere im Hinblick auf unterschiedliche Möglichkeiten der Einleitung der zur Bruchtrennkraft diametralen Reaktionskraft in das jeweilige Maschinenteil gestaltete Bruchtrenn-Dorne und mit diesen jeweils in Aufbau und Anordnung angepaßte Bruchtrenn-Vorrichtungen. Weitere Unteransprüche beziehen sich auf Anwendungen der erfindungsgemäßen Bruchtrenn-Vorrichtungen hinsichtlich Anzahl und Anordnung mehrerer abzutrennender Lagerdeckel, ferner hinsichtlich relativer Anordnungen von Bruchtrennflächen eines Lagerdeckels und schließlich hinsichtlich des Handlings bruchgetrennter Lagerdeckel eines oder mehrerer Maschinenteile.

Die Erfindung ist anhand von der Zeichnung schematisch dargestellten Beispielen beschrieben. Es zeigt
- Figur 1: eine erfindungsgemäße Bruchtrenn-Vorrichtung im prinzipiellen Aufbau zum Bruchtrennen eines mit einem Kurbelgehäuse integral gegossenen Lagerdeckels einer Kurbelwellen-Lagerung mittels eines Halbdornes,
- Figuren 2 und 3: eine erste Bruchtrenn-Vorrichtung zum gemeinsamen Bruchtrennen mehrerer KW-Lagerdeckel eines Kurbelgehäuses mittels eines massiven Volldornes,
- Figuren 4 und 5: eine zweite Bruchtrenn-Vorrichtung zum gemeinsamen Bruchtrennen mehrerer KW-Lagerdeckel mittels eines aus radial zueinander bewegbaren Abschnitten gebauten Volldornes, und

Eine Vorrichtung 1 zum Bruchtrennen eines mit einem Kurbelgehäuse 2 integral gegossenen Lagerdeckels 3 fluchtend angeordneter Lagerbohrungen 4 in Lageranordnungen 5 ist strukturell aus einer Bruchtrenn-Einrichtung 6 und einem nicht näher gezeigten Gestell 7 mit einer Aufnahme 8 für das Kurbelgehäuse 2 gebildet. Die Bruchtrenn-Einrichtung 6 umfaßt ein kombiniertes Betätigungs-/Führungs-Gestänge 9, das in Wirkverbindung steht mit einem als hydraulische Kolben-Zylinder-Einheit 10 gestalteten Energiespeicher zur Bewirkung einer vorbestimmten Vorspannkraft sowie der Bruchtrennkraft am Lagerdeckel 3.

Das kombinierte Betätigungs-/Führungs-Gestänge 9 wirkt zum Bruchtrennen des Lagerdeckels 3 vom Kurbelgehäuse 2 mit einem in der Lagerbohrung 4 lagerdeckelseitig axial anordbaren Halbdorn 11 zusammen. Der vorzugsweise maschinell in die Lagerbohrung 4 axial eingeführte Halbdorn 11 steht mit beiderseits der Lageranordnung 5 positionierten Laschen 12 in Verbindung, die über ein Zwischenstück 13 mit einer Kolbenstange 14 der Kolben-Zylinder-Einheit 10 verbunden sind. Die Laschen 12 weisen dem Querschnitt des Halbdornes 11 entsprechend und mit geringem Spiel angepaßte Durchbrechungen 12' auf, die damit zugleich der Drehsicherung des Halbdornes 11 relativ zur Richtung der Bruchtrennkraft gemäß Pfeil "A" dienen.

Das über die Laschen 12 am Halbdorn 11 quer zu seiner Längserstreckung angreifende Gestänge 9 dient gemäß der Erfindung zusätzlich der Führung des zum Bruchtrennen dienenden Halbdornes 11 in Bruchtrenn-Richtung gemäß Pfeil "A". Die für eine mehr oder weniger einstufige Bruchtrennung des Lagerdeckels 3 vorteilhafte Gerad-Führung des Halbdornes 11 in Bruchtrenn-Richtung ist in einfacher Weise mittels einer zylinderseitigen Führung 15 der Kolbenstange 14 in der Kolben-Zylinder-Einheit 10 erzielt. Das erfindungsgemäß kombinierte Betätigungs/Führungs-Gestänge 9 ergibt somit unter Beachtung der beim Bruchtrennen üblichen geringen Verlagerung des Halbdornes 11 eine Bruchtrenn-Einrichtung 6 mit einem gegenüber der Bruchtrennkraft vorteilhaft geringen Reibkraftanteil. Der damit erreichte günstige Wirkungsgrad ermöglicht den Einsatz eines kleinbauenden Energiespeichers wie der vorzugsweise hydraulischen Kolben-Zylinder-Einheit 10.

Das erfindungsgemäß kombinierte Betätigungs-/Führungs-Gestänge 9 ermöglicht ferner bei vorteilhaft kompaktem Aufbau der Bruchtrenn-Einrichtung 6 eine massive Ausgestaltung des Gestänges 9 mit massiven Laschen 12 zur Vermeidung von auf den einstufigen Bruchtrenn-Vorgang sich nachteilig auswirkenden Werkstoffelastizitäten.

Mit der weitestgehenden Ausschaltung von Werkstoffelastizitäten ergibt sich ein zugsteifes Betätigungs/Führungs-Gestänge 9, das eine auf die Qualität des zu brechenden Maschinenteils abgestellte Vorspannkraft aus der hydraulischen Kolben-Zylinder-Einheit 10 erlaubt, die um 10 bis 30 % geringer ist als die Bruchtrennkraft. Für ein einstufiges Bruchtrennen des Lagerdeckels 3 ist eine geringe Differenz zwischen Vorspannkraft und Bruchtrennkraft vorteilhaft. Eine geringe Differenz der beiden Kräfte ergibt bei vorteilhaft schnell mittels eines Stufenkolbens 16 eingeleiteter hydraulisch übersetzter Beaufschlagung des Kolbens 17 des Energiespeichers 10 einen sehr steil ansteigenden Bruchtrenn-Kraftverlauf für das gewünschte einstufige Bruchtrennen des Lagerdeckels 3 vom Kurbelgehäuse 2.

Weiter wesentlich für das Gelingen einer einstufigen Bruchtrennung des Lagerdeckels 3 ist dessen Drehsicherung während des Bruchtrennvorganges. Da auch bei genau mittig in den Lagerdeckel 3 eingeleiteter Bruchtrennkraft ein gleichmäßiges Brechen in beiden Trennbereichen von Lagerdeckel 3 und Kurbelgehäuse 2 aufgrund von Inhomogenitäten des Kurbelgehäuse-Werkstoffes nicht wahrscheinlich ist, wird nach einem Bruch in einem der Trennbereiche bei weiterem Trennvorgang eine Drehung des Lagerdeckels 3 um den noch nicht durchgetrennten anderen Trennbereich auftreten. Zur Vermeidung dieser für die Qualität der Bruchtrennflächen eines Trennbereiches schädlichen Drehung ist der Lagerdeckel 3 mittels eines vorzugsweise gesteuert hydraulisch wirksamen und gegebenenfalls verriegelbaren (nicht gezeigt) Anschlages 18 drehgesichert.

Das erfindungsgemäß kombinierte Betätigungs-/Führungs-Gestänge 9 ermöglicht in vorteilhafter Weise die integrale Anordnung des hydraulischen Anschlages 18 in dem Gestänge 9, wodurch eine Klemm-Halterung des Lagerdeckels 3 am Halbdorn 11 während des Bruchtrenn-Vorganges und darüber hinaus erzielt ist. Diese integrale Anordnung des in dem mit den Laschen 12 fest verbundenen Zwischenstückes 13 geführt angeordneten Anschlages 18 ermöglicht in erfinderischer Kombination mit dem über die Durchbrechungen 12' relativ zu den Laschen 12 drehgesicherten Halbdorn 11 eine Klemm-Halterung des Lagerdeckels 3 mit einer in einem massiven Abschnitt des Gestänges 9 erzielten Aktio/Reaktio-Wirkung, die vorteilhafterweise ohne Einfluß auf die Führung 15 der Kolbenstange 14 des Gestänges 9 ist.

Die Lagerbohrung 3 ist zur gezielten Brucheinleitung vorzugsweise mit bekannten Bruchtrennkerben 19 ausgebildet. Diese genügen zum Bruchtrennen des Lagerdeckels 3 mittels der Vorrichtung 1 mit beiderseits der Lagerbohrung 4 in einer Ebene angeordneten Bruchtrennflächen. Bei zueinander geneigt angeordneten Bruchtrennflächen gemäß der prioritätsbegründenden Anmeldung P 44 13 255 sind den Bruchtrennkerben 19 zusätzlich die Bruchtrenn-Richtung beeinflussende Stufen 20 zugeordnet. Wesentlich hierbei ist die Gestaltung des Halbdornes 11, dessen Krümmungsradius im Bereich der Auflage in der Lagerbohrung 4 in Abhängigkeit des jeweiligen Winkels α zwischen den zueinander geneigten Bruchtrennflächen eines Lagerdeckels 3 um 0,5 % bis 5 % geringer gewählt ist als der konstante Krümmungsradius der Lagerbohrung 4.

Für die nach dem Bruchtrennen für jeden Lagerdeckel 3 erforderliche Zuordnung zur jeweiligen Lageranordnung 4 ist jeder Lagerdeckel 3 mittels nicht gezeigter Schraubbolzen lose am Kurbelgehäuse 2 gehalten. Bei zueinander geneigten Bruchtrennflächen mit jeweils hierzu etwa senkrecht gerichteten Befestigungsschrauben ist ein derartiger Lagerdeckel 3 beim Bruchtrennen mittels besonderer, verjüngte Schäfte aufweisende Schraubbolzen am Kurbelgehäuse 2 lose gehalten. Diese Schaftverjüngungen dienen in Verbindung mit den Schraubbolzen-Durchgangsbohrungen im jeweiligen Lagerdeckel 3 dazu, daß dieser in Bruchtrenn-Richtung beim Bruchtrennen ausreichend verlagerbar ist.

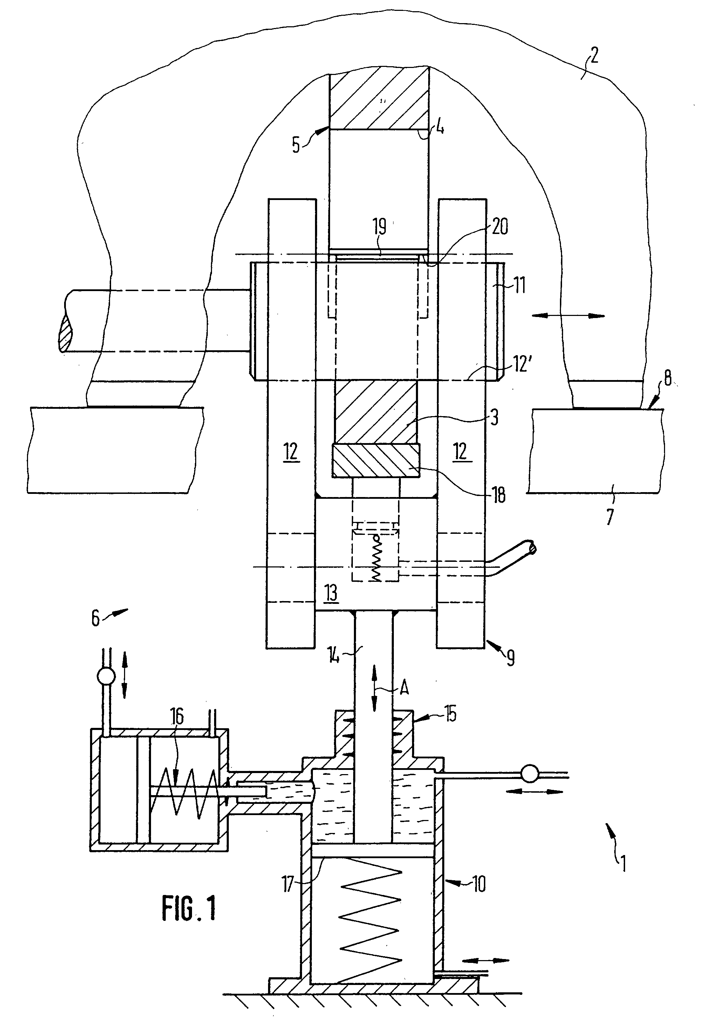

Die in den weiteren Figuren gezeigten Vorrichtungen zum Bruchtrennen basieren prinzipiell auf der Vorrichtung 1 der Figur 1, sind jedoch zum gleichzeitigen Bruchtrennen mehrerer Lagerdeckel eines Kurbelgehäuses weitergebildet, vorzugsweise zum Bruchtrennen eines Lagerdeckel-Verbundrahmens, in dem die Lagerdeckel miteinander fest verbunden sind.

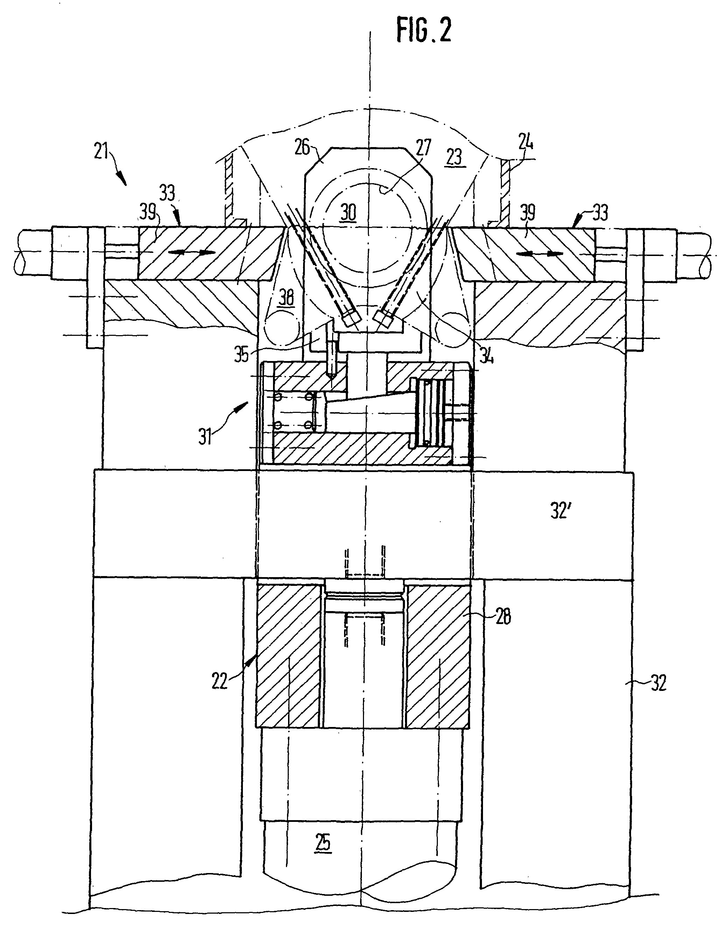

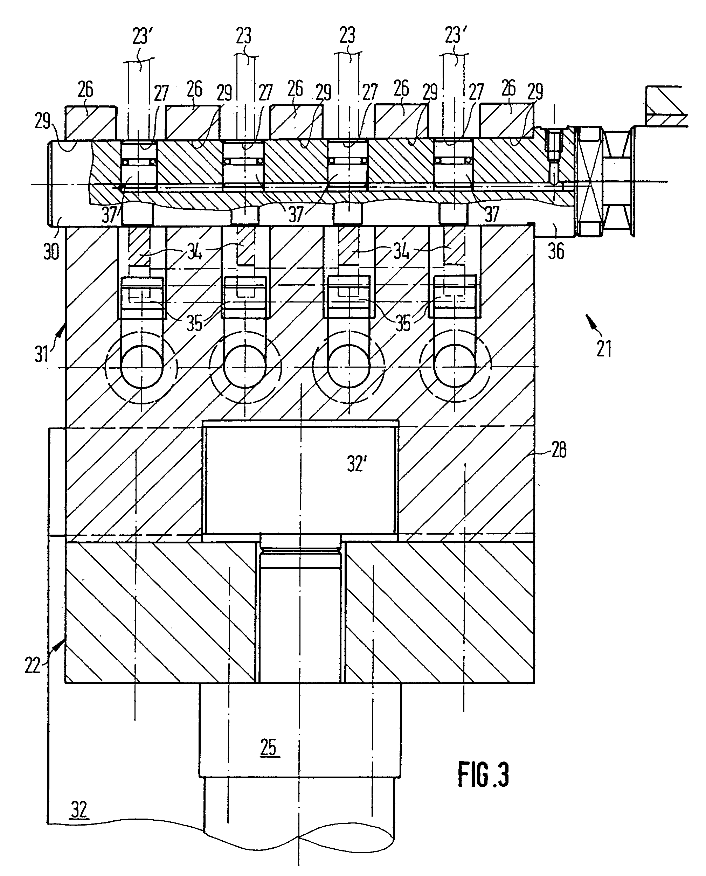

Bei der aus den Figuren 2 und 3 ersichtlichen Vorrichtung 21 umfaßt das kombinierte Betätigungs-/Führungs-Gestänge 22 zwischen benachbarten Lageranordnungen 23 eines Kurbelgehäuses 24 jeweils eine mit der Kolben-Zylinder-Einheit 25 wirkverbundene Lasche 26. Diese mit der Kolben-Zylinder-Einheit 25 über einen gemeinsamen Zugbalken 28 verbundenen Laschen 26 weisen zu den Lagerbohrungen 27 der Lageranordnungen 23 jeweils fluchtend anordbare Durchbrechungen 29 zur geführten Aufnahme eines in axialer Richtung der Lagerbohrungen 27 einführbaren Volldornes 30 auf. Weiter ist die aus dem kombinierten Betätigungs-/Führungs-Gestänge 22 und dem Energiespeicher 25 im wesentlichen gebildete Bruchtrenn-Einrichtung 31 in einem Gestell 32 angeordnet, das eine Aufnahme 33 zur positionierten Anordnung des Kurbelgehäuses 24 relativ zur Bruchtrenn-Einrichtung 31 aufweist.

Wie insbesondere aus Figur 3 ersichtlich, weist die Bruchtrenn-Einrichtung 31 zwischen den Lageranordnungen 23 sowie außerhalb der End-Lageranordnungen 23' für Vorspannung und Bruchtrennkraft auf zugbeanspruchte Laschen 26 auf, die von der an einem Gestellbalken 32' abgestützten Kolben-Zylinder-Einheit 25 gemeinsam betätigt über den Volldorn 30 auf die bruchtrennbaren Lagerdeckel 34 einwirken. An den Laschen 26 sind zur drehsichernden Halterung der Lagerdeckel 34 gegen diese gesteuert zustellbare Anschläge 35 vorgesehen. Weiter ist aus der Figur 3 ersichtlich, daß der Volldorn 30 mit einem Anschlagbund 36 axial gegen eine äußere Lasche 26 anschlägt und daß der Volldorn 30 mittels in den Lagerbohrungen 27 der Lageranordnungen 23 anschlagender hydraulischer Kolben 37 geklemmt axial lagegesichert ist.

Schließlich kann der z.B. maschinell zuführbare Volldorn 30 zur Erzielung eines zeitlich unterschiedlichen Bruchtrennens vorbestimmter Lagerdeckel 34 in seinem lagerdeckelseitigen Umfangsbereich insbesondere radial exzentrisch versetzte Profile aufweisen, über die diesem zugeordnete Lagerdeckel 34 geringfügig zeitlich später gebrochen werden.

Bei der Vorrichtung 21 ist, wie aus der Figur 2 ersichtlich, die als Zugkraft über die Bruchtrenn-Einrichtung 31 bewirkte Bruchtrennkraft über die Aufnahme 33 des Gestells 32 abgestützt. Weiter ist ersichtlich, daß die Lagerdeckel 34 zu einem Lagerdeckel-Verbundrahmen 38 zusammengefaßt sind. Um die Positionierung des Kurbelgehäuses 24 relativ zu der Bruchtrenn-Einrichtung 31 zu erleichtern, ist das Gestell 32 mit quer zur Bruchtrenn-Richtung verfahrbar angeordneten Stützaufnahmen 39 für das Kurbelgehäuse 24 ausgerüstet.

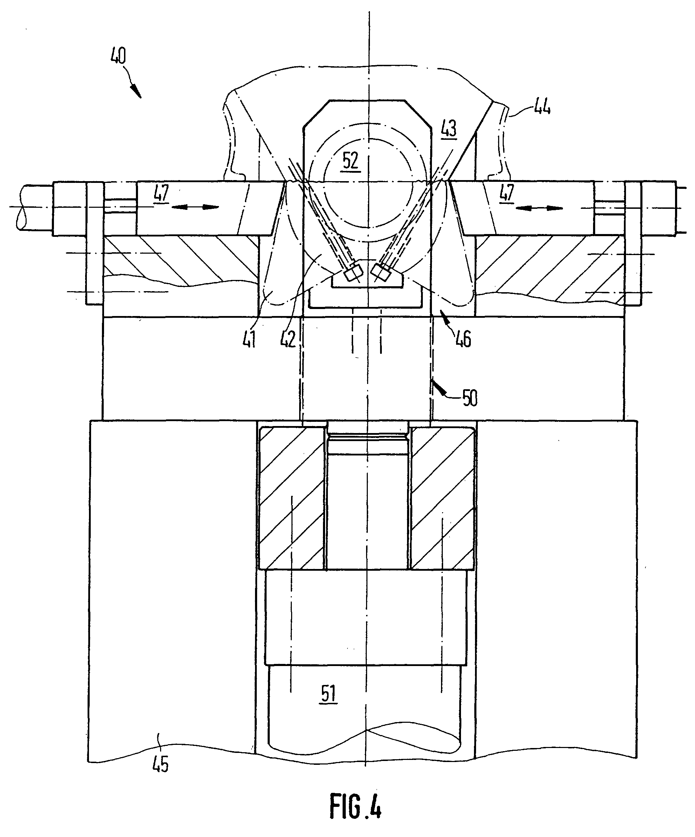

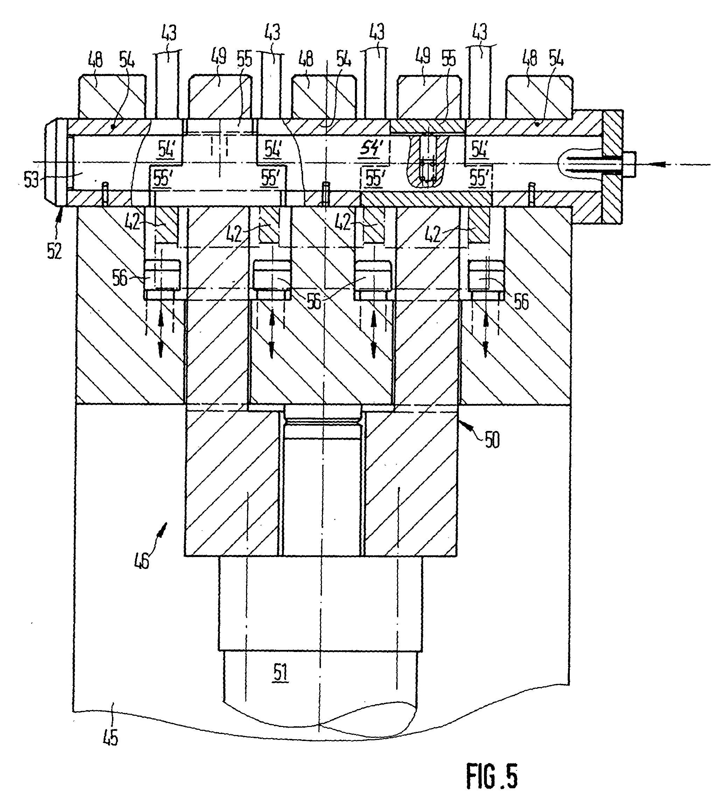

Eine in den Figuren 4 und 5 gezeigte Vorrichtung 40 dient ebenfalls dem Bruchtrennen mehrerer in einem Lagerdeckel-Verbundrahmen 41 angeordneter Lagerdeckel 42 für Lageranordnungen 43 eines Kurbelgehäuses 44. Die Vorrichtung 40 umfaßt in ihrer Struktur ein Gestell 45 und eine Bruchtrenn-Einrichtung 46. Auf quer verfahrbaren Stützaufnahmen 47 des Gestells 45 ist das Kurbelgehäuse 44 relativ zu der das Bruchtrennen auf Zug bewirkenden Bruchtrenn-Einrichtung 46 positioniert. Abweichend von der Vorrichtung 21 der Figuren 2 und 3 ist bei der Vorrichtung 40 die Bruchtrennkraft nicht von außen in das Kurbelgehäuse 44 eingeleitet, sondern über gestellfeste Stützlaschen 48 unmittelbar in die Lagerbohrungen der Lageranordnungen 43 des Kurbelgehäuses 44.

Die Stützlaschen 48 sind relativ zu den Lageranordnungen 43 des Kurbelgehäuses 44 derart angeordnet, daß zwischen je zwei Stützlaschen 48 eine Zuglasche 49 des kombinierten Betätigungs-/Führungs-Gestänges 50 angeordnet ist. Die Laschen 49 sind gemeinsam von einer Kolben-Zylinder-Einheit 51 der Bruchtrenn-Einrichtung 46 betätigt. Durch die andere Art der Abstützung der Bruchtrennkraft ergibt sich für die Bruchtrenn-Einrichtung 46 ein gebauter Volldorn 52.

Der gebaute Volldorn 52 umfaßt einen Tragdorn 53, auf dem wechselweise in den Stützlaschen 48 zentrierte Abstützhülsen 54 und in den Zuglaschen 49 zentrierte Bruchtrenn-Hülsen 55 angeordnet sind. Die Bruchtrenn-Hülsen 55 sind relativ zum Tragdorn 53 in Bruchtrenn-Richtung beweglich angeordnet und greifen mit axial gerichteten, halbringartigen Fortsätzen 55' in benachbarte Lageranordnungen 43 ein zur Einwirkung auf bruchtrennbare Lagerdeckel 42. Die in den Stützlaschen 48 zentrierten Abstützhülsen 54 weisen axial gerichtete, halbringartige Vorsprünge 54' auf, mittels der die der Bruchtrennkraft diametrale Reaktionskraft in die jeweilige Lagerbohrung einer Lageranordnung 43 in einem zum bruchtrennbaren Lagerdeckel 42 diametralen Umfangsbereich eingeleitet ist. Damit sind die Bruchtrennkräfte in den Lagerbohrungen der Lageranordnungen 43 abgestützt und somit von übrigen Teilen des Kurbelgehäuses 44 ferngehalten.

Der mit seinen Bruchtrenn-Hülsen 55 und Abstütz-Hülsen 54 die jeweiligen Bohrungsquerschnitte in den Laschen 48 und 49 sowie in den Lageranordnungen 43 mit zweckmäßig gewähltem Spiel im wesentlichen ausfüllend gebaute Volldorn 52 ist an einer der Stützlaschen 48 drehgesichert angeordnet, wobei zur genauen Ausrichtung der Bruchtrenn-Hülsen 55 in Bruchtrenn-Richtung die Abstütz-Hülsen 54 mit dem Tragdorn 53 des Volldornes 52 drehfest verbunden sind. Wie aus der Figur 5 weiter hervorgeht, sind die Bruchtrenn-Hülsen 55 zwischen den drehfest auf dem Tragdorn angeordneten Abstütz-Hülsen 54 abschnittsweise stirnseitig geführt, wobei diese Führung weiter dadurch unterstützt wird, daß jede Bruchtrenn-Hülse 55 über eine axial relativ breite Basis einwirkende Zuglasche 49 betätigt ist.

Weiter ist die Vorrichtung 40 an den massiven Zuglaschen 49 des kombinierten Betätigungs-/Führungs-Gestänges 50 mit gesteuert zustellbaren Drehsicherungs-Anschlägen 56 (schematisch dargestellt) ausgerüstet.

Eine gesonderte höhenverstellbare Anordnung eines jeweiligen Kurbelgehäuses kann sich erübrigen, wenn der jeweilige Dorn in seinem Radius von dem der jeweiligen Lagerbohrung der Lageranordnungen deutlich kleiner ist, maximal bis zu 5 %.

Im übrigen kann die erfindungsgemäße Bruchtrenn-Vorrichtung in jeder Raumlage Verwendung finden.

## Patentansprüche

1. Verrichtung zum Bruchtrennen von Lagerdeckeln fluchtend angeordneter Lagerbohrungen in Lageranordnungen eines Maschinengehäuses, insbesondere Kurbelgehäuse einer Hubkolbenmaschine,
- bei der mittels eines etwa halbkreisförmig profilierten, geführt angeordneten Trennelementes in der Lagerbohrung über ein mit einem Energiespeicher wirkverbundenes Betätigungsgestänge auf den Lagerdeckel eine zu dessen beidseitigen Bruchtrennflächen mit dem Maschinengehäuse etwa ausgemittelte Bruchtrennkraft bewirkt ist,
**dadurch gekennzeichnet,**
- **daß** zum Bruchtrennen mindestens eines Lagerdeckels (3, 34, 42) von dem positionierten Maschinengehäuse (2) ein in die Lagerbohrung (4, 27) der Lageranordnung (5, 23, 43) und in eine Durchbrechung (12', 29) einer oder mehrerer Laschen (12, 26, 49) eines kombinierten Betätigungs-/Führungs-Gestänges (9, 22, 50) axial einführbarer ein- oder mehrteiliger Dom (11, 30, 52) dient, wobei
- das Betätigungs-/Führungsgestänge (9, 22, 50) als Energiespeicher eine Kolben-Zylinder-Einheit (10, 25, 51) mit einer einen weiteren Abschnitt des Betätigungsgestänges (9, 22, 50) bildenden Kolbenstange umfaßt, die
- der Geradführung der den jeweiligen Dorn (11, 30, 52) umgreifend angeordneten Lasche/n (12, 26, 49) dient, und
- ferner in dem Betätigungs-/Führungs-Gestänge (9, 22, 52) Mittel (18, 35, 56) vorgesehen sind zur drehsichernden Klemmhalterung jedes Lagerdeckels (3, 34, 42) am jeweiligen drehgesichert gehaltenen Dorn (11, 30, 52).

2. Vorrichtung nach Anspruch 1, **dadurch gekennzeichnet,**
- **daß** der Kolben der Kolben-Zylinde-Einheit (10, 25, 51) für eine Vorspannkraft von ca. 70 bis 90 % der Bruchtrennkraft hydraulisch beaufschlagt ist, und
- **daß** der Kolben zur Bewirkung einer schlagartig wirksamen Bruchtrennkraft hydraulisch übersetzt beaufschlagt ist.

3. Vorrichtung nach Anspruch 1 und 2, **dadurch gekennzeichnet,**
- **daß** die aus kombiniertem Betätigungs/Führungs-Gestänge (22, 50) und Energiespeicher (25, 51) im wesentlichen bestehende Bruchtrenn-Einrichtung (31, 46) in dem Gestell (32, 45) angeordnet ist,
- das mindestens mit einer der positionierten Anordnung des Maschinengehäuses (Kurbelgehäuse 24, 44;) relativ zur Bruchtrenn-Einrichtung (31, 46) dienenden Aufnahme (33) ausgebildet ist (Figuren 2, 3; 4, 5).

4. Vorrichtung nach den Ansprüchen 1 bis 3, **dadurch gekennzeichnet,**
- **daß** das Gestell (32) mit seiner Aufnahme (33) einer die Bruchtrennkraft abstützenden Auflage eines Lageranordnungen (23, 23') aufweisenden Kurbelgehäuses (24) einer Hubkolbenmaschine dient, wobei
- die Bruchtrenn-Einrichtung (31) zwischen den Lageranordnungen (23) sowie außerhalb der End-Lageranordnungen (23') für Vorspannung und/oder Bruchtrennkraft auf Zug/Druck beanspruchte Laschen 26) aufweist, die
- von der Kolben-Zylinder-Einheit (25) gemeinsam betätigt über einen Volldorn (30) auf die bruchtrennbaren Lagerdeckel (34) einwirken, wobei
- an den Laschen (26) zur drehsichernden Halterung der Lagerdeckel (34) gegen diese gesteuert zustellbare Anschläge (35) vorgesehen sind (Figuren 2, 3).

5. Vorrichtung nach den Ansprüchen 1 bis 4, **dadurch gekennzeichnet,**
- **daß** der Volldorn (30) mittels eines Anschlags (36) axial positioniert ist, und
- ferner beim Bruchtrennen zumindest in einer Lagerbohrung (27) der Lageranordnungen (23, 23') mittels einer Klemmhalterung axial lagegesichert ist (Figuren 2, 3).

6. Vorrichtung nach den Ansprüchen 1 bis 5, **dadurch gekennzeichnet,**
- **daß** der zum Bruchtrennen einer vorbestimmten Anzahl von Lagerdeckeln (34) vorgesehene Volldorn (30) in seinem lagerdeckelseitigen Umfangsbereich auf ein zeitlich unterschiedliches Bruchtrennen vorbestimmter Lagerdeckel (34) abgestimmte Profile aufweist, wobei
- der Volldorn (30) mittels in mehreren Lagerbohrungen (27) wirksamen Klemmhalterungen (Hydraulik-Kolben 37) axial lagegesichert ist (Figuren 2,3).

7. Vorrichtung nach den Ansprüchen 1 bis 3, **dadurch gekennzeichnet,**
- **daß** die Bruchtrenn-Einrichtung (44,) einen aus radial bewegbaren Abschnitten (55,) gebauten Volldorn (52,) umfaßt sowie
- relativ zu den antriebsbeweglichen Zug-/Druck-Laschen (49) gestellfest angeordnete Stützlaschen (48), wobei
- ein mit den jeweiligen Stützlaschen (48) zusammenwirkender Volldorn-Abschnitt (54,) der Abstützung der Bruchtrennkraft in der jeweiligen Lagerbohrung einer Lageranordnung (43) in einem zum bruchtrennbaren Lagerdeckel (42) diametralen Umfangsbereich dient (Figuren 4, 5).

8. Vorrichtung nach Anspruch 7, **dadurch gekennzeichnet,**
- **daß** der gebaute Volldorn (52) einen Tragdorn (53) umfaßt zur wechselweisen Anordnung von in den Stützlaschen (48) zentrierten Abstützhülsen (54) und in den Zug-/Druck-Laschen (49) zentrierten Bruchtrennhülsen (55), wobei
- die relativ zum Tragdorn (53) in Bruchtrennrichtung beweglich angeordneten Bruchtrennhülsen (55) mit axial gerichteten, halbringartigen Fortsätzen (55') in benachbarte Lageranordnungen (43) zur Einwirkung auf bruchtrennbare Lagerdeckel (42) eingreifen und weiter
- in dem zum jeweiligen Lagerdeckel (42) diametralen Bereich in der Lagerbohrung der Lageranordnung (43) ein axial gerichteter, halbringartiger Vorsprung (54') der benachbarten, auf dem Tragdorn (53) zentrierten Abstützhülse (54) zur Anlage angeordnet ist (Figuren 4, 5).

9. Vorrichtung nach Anspruch 7 und 8, **dadurch gekennzeichnet,**
- **daß** eine Bruchtrennhülse (55) zumindest abschnittsweise stirnseitig über mit dem Tragdorn (53) drehfest verbundene Abstützhülsen (54) in Bruchtrennrichtung geführt angeordnet ist, wobei
- der gebaute Volldorn (52) relativ zur Bruchtrennrichtung drehgesichert angeordnet ist und
- die auf die jeweilige Bruchtrennhülse (55) über eine axial relativ breite Basis einwirkende Zug-/Drucklasche (49) mit den Lagerdeckeln (42) benachbarter Lageranordnungen (43) gesteuert zustellbaren Drehsicherungs-Anschlägen (56) ausgerüstet ist (Figur 4, 5).

10. Vorrichtung nach einem oder mehreren der Ansprüche 1 bis 9, **dadurch gekennzeichnet,**
- **daß** das Gestell mit einer relativ zur jeweiligen Bruchtrenn-Einrichtung höhenverstellbaren Aufnahme für das Kurbelgehäuse ausgebildet ist, wobei die über eine Justiereinrichtung gesteuerte Höbeneinstellung der fluchtanden Ausrichtung der Lageranordnungen des Kurbelgehäuses zu den Dorn-Durchbrechungen in den Zug-/Druck-Laschen und/oder den Stutzelementen dient zum klemmfreien Einschub des jeweiligen Bruchtrenn-Dornes.

11. Vorrichtung nach einem oder mehreren der Ansprüche 1 bis 10, **dadurch gekennzeichnet, daß** das Gestell (32, 45) quer zur Bruchtrennrichtung verfahrbar angeordnete Aufnahmen (39, 47) für das Kurbelgehäuse (24, 44) aufweist. (Fig. 4)

12. Vorrichtung nach einem oder mehreren der Ansprüche 1 bis 11, **gekennzeichnet durch** die Verwendung zum Bruchtrennen eines mehrere Lagerdeckel (34, 42) in einem festen Verbund umfassenden Lagerdeckel-Verbundrahmens (38, 41).

13. Vorrichtung nach einem oder mehreren der Ansprüche 1 bis 12, **gekennzeichnet durch** die Verwendung von in den Lageranordnungen (5, 23, 43, 59) auf Bruchtrenn-Freigang beabstandet zu den Lagerdeckeln (3, 34, 42, 60) angeordneten Hilfs-Schrauben mit gegebenenfalls verjüngten Schäften.

## Claims

1. A device for breaking apart aligned bores in bearing covers in bearing arrangements for a machine casing, especially a crankcase of a reciprocating engine,
- wherein a breaking-apart force approximately equalised on both breaking-apart surfaces adjoining the engine casing is exerted on the bearing cover by an approximately semicircular-profiled, guided separating element in the bearing bore, via an actuating linkage operatively connected to an energy accumulator,
**characterised in that**
- at least one bearing cover (3, 34, 42) is broken away from the positioned engine casing (2) by a single or multi-part mandrel (11, 30, 52) axially insertable into the bearing bore (4, 27) of the bearing arrangement (5, 23, 43) and into an aperture (12', 29) in one or more lugs (12, 26, 49) of a combined actuating and guiding linkage (9, 22, 50), wherein
- the actuating and guiding linkage (9, 22, 50) comprises an energy accumulator in the form of a piston-cylinder unit (10, 25, 51) with a piston rod constituting another portion of the actuating linkage (9, 22, 50),
- the piston rod being used for alignment of the lug or lugs (12, 26, 49) disposed around the respective mandrels (11, 30, 52), and
- means (18, 35, 56) are provided in the actuating and guiding linkage (9, 22, 52) for non-rotatably clamping and holding each bearing cover (3, 34, 42) against the respective non-rotatably held mandrel (11, 30, 52).

2. A device according to claim 1, **characterised in that**
- the piston of the piston-cylinder unit (10, 25, 51) is hydraulically actuated to obtain a prestressing force of about 70 to 90% of the breaking-apart force, and
- the piston is actuated in hydraulically stepped-up manner to obtain an abruptly acting breaking-apart force.

3. A device according to claims 1 and 2, **characterised in that**
- the breaking-apart means (31, 46) substantially comprising the combined actuating and guiding linkage (22, 50) and the energy accumulator (25, 51) is disposed in a frame (32, 45) which
- is formed at least with a holder (33) for positioned arrangement of the machine casing (crankcases 24, 44) relative to the breaking-apart means (31, 46) (Figures 2, 3; 4, 5).

4. A device according to claims 1 to 3, **characterised in that**
- the frame (32) and its holder (33) are for supporting and reinforcing the force for breaking apart a crankcase (24) of a reciprocating engine comprising a number of bearing arrangements (23, 23'), wherein
- the breaking-apart means (31) has lugs (26) subjected to tensile and compressive stresses between the bearing arrangements (23) and outside the end bearing arrangements (23') for prestress and/or breaking-apart force,
- the lugs being jointly actuated by the piston-cylinder unit (25) via a full mandrel (30) and acting on the breaking-apart bearing covers (34) wherein
- stops (35) adjustable relative to the bearing covers (34) are provided on the lugs (26) for non-rotatably holding the bearing covers (34) (Figures 2 and 3).

5. A device according to claims 1 to 4, **characterised in that**
- the full mandrel (30) is axially positioned by a stop (36), and
- is axially secured in position by a clamping holder, at least in a bearing bore (27) of the bearing arrangements (23, 23'), during the breaking-open process (Figures 2, 3).

6. A device according to claims 1 to 5, **characterised in that**
- the full mandrel (30) for breaking apart a predetermined number of bearing covers (34) has profiles in its peripheral region on the bearing-cover side, the profiles being adapted for breaking and opening predetermined bearing covers (34) at different times, wherein
- the full mandrel (30) is axially secured in position by clamping and holding means (hydraulic piston 37) operative in a number of bearing bores (27) (Figures 2, 3).

7. A device according to claims 1 to 3, **characterised in that**
- the breaking-apart means (44) comprises a full mandrel (52) made up of radially movable portions (55), and
- supporting lugs (48) secured to the frame relative to the tension and pressure lugs (49), which are movable for driving purposes, wherein
- a portion (54) of the full mandrel co-operating with the respective supporting lugs (48) reinforces the breaking-apart force in the respective bearing bore of a bearing arrangement (43) in a peripheral region diametrically opposite the breakable-apart bearing cover (42) (Figures 4, 5).

8. A device according to claim 7, **characterised in that**
- the composite full mandrel (52) comprises a bearing mandrel (53) for alternating arrangement of reinforcing sleeves (54) centred in the supporting lugs (48) and breaking-apart sleeves (55) centred in the tension/compression lugs (49), wherein
- the breaking-apart sleeves (55) disposed so as to be movable relative to the supporting mandrel (53) in the breaking-apart direction have axially extending semicircular extensions (55') in neighbouring bearing arrangements (43) for acting on breakable-apart bearing covers (42) and
- an axially extending semicircular projection (54') on the neighbouring reinforcing sleeve (54) centred on the bearing mandrel (53) is disposed for abutment in the bearing bore of the bearing arrangement (43) in the region diametrically opposite the respective bearing cover (42) (Figures 4, 5).

9. A device according to claims 7 and 8, **characterised in that**
- a breaking-apart sleeve (55) at least in portions at the end place is disposed and guided in the breaking-apart direction via reinforcing sleeves (54) non-rotatably connected to the supporting mandrel (53), wherein
- the composite full mandrel (52) is non-rotatably disposed relative to the breaking-apart direction, and
- the tension and pressure lug (49) acting on the respective breaking-apart sleeve (55) over an axially relatively wide base is equipped with rotation-preventing stops (56) adjustable in controlled manner to the bearing covers (42) in neighbouring bearing arrangements (43) (Figures 4 and 5).

10. A device according to one or more of claims 1 to 9, **characterised in that**
- the frame is equipped with a crankcase holder vertically adjustable relative to the respective breaking-apart means, wherein the vertical adjustment, controlled by an adjusting means, of the alignment of the bearing arrangements of the crankcase relative to the mandrel apertures in the tension/compression lugs and/or the supporting elements is for the purpose of clamp-free insertion of the respective breaking-apart mandrel.

11. A device according to one or more of claims 1 to 10, **characterised in that** the frame (32, 45) has holders (39, 47) for the crankcase (24, 44) disposed and movable transversely of the breaking-apart direction (Figure 4).

12. A device according to one or more of claims 1 to 11, **characterised by** use of a combined bearing-cover frame (38, 41) comprising a number of bearing covers (34, 42) in a fixed combination.

13. A device according to one or more of claims 1 to 12, **characterised by** use of auxiliary screws, optionally with tapering shanks, in the bearing arrangements (5, 23, 43, 59) at a distance from the bearing covers (3, 34, 42, 60) for free passage during breaking apart.

## Revendications

1. Dispositif de séparation par rupture de chapeau de palier des perçages de palier alignés dans des dispositifs de palier d'un carter de machine, notamment d'un carter de vilebrequin d'un moteur à piston linéaire,
- dans lequel à l'aide d'un élément de séparation monté de manière guidée, à profil sensiblement semi-circulaire, dans le dispositif de palier, une tringlerie d'actionnement coopérant avec un accumulateur d'énergie exerce, sur le chapeau de palier, une force de séparation par rupture, sensiblement moyenne sur ses surfaces de séparation de rupture des deux côtés, par rapport au carter du moteur,
**caractérisé en ce que**
- pour la séparation par rupture d'au moins un chapeau de palier (3, 34, 42) par rapport au carter de moteur (2), positionné, on utilise une broche en une ou plusieurs parties (11, 30, 52) s'introduisant axialement dans le perçage de palier (4, 27) du dispositif de palier (5, 23, 43) et dans un passage (12', 29) d'une ou plusieurs pattes (12, 26, 49) d'une tringlerie combinée d'actionnement et de guidage (9, 22, 55),
- la tringlerie d'actionnement et de guidage (9, 22, 50) comprenant comme accumulateur d'énergie, un ensemble piston/cylindre (10, 25, 51) avec une tige de piston formant un autre segment de la tringlerie d'actionnement (9, 22, 50),
- cette tige de piston servant au guidage rectiligne des pattes (12, 26, 49) entourant la broche respective (11, 30, 52), et
- en outre des moyens (18, 35, 56) sont prévus dans la tringlerie d'actionnement et de guidage (9, 22, 52) pour bloquer en rotation chaque chapeau de palier (3, 34, 42) sur chaque broche (11, 30, 52) maintenues bloquées en rotation.

2. Dispositif selon la revendication 1,
**caractérisé en ce que**
- le piston de l'ensemble piston/cylindre (10, 25, 51) est sollicité pour une force de précontrainte de l'ordre de 70 à 90 % de la force de rupture de séparation, hydraulique, et
- le piston est sollicité de manière démultipliée hydrauliquement pour produire une force de rupture de séparation agissant brutalement.

3. Dispositif selon l'une quelconque des revendications 1 et 2,
**caractérisé en ce que**
- l'installation de séparation par rupture (31, 46) formée essentiellement de la tringlerie d'actionnement et de guidage combinée (22, 50) et de l'accumulateur d'énergie (25, 51) est montée dans un bâti (32, 45),
- il comporte au moins un dispositif de réception (33) avec un montage positionné du carter de moteur (carter de vilebrequin 24, 44) par rapport à l'installation de séparation par rupture (31, 46) (figures 2, 3, 4, 5).

4. Dispositif selon l'une quelconque des revendications 1 à 3,
**caractérisé en ce que**
- le bâti (32) sert avec son logement (33) d'appui pour la force de séparation par rupture d'un carter de vilebrequin (24) d'un moteur à piston linéaire comportant des dispositifs de palier (23, 23'),
- l'installation de séparation par rupture (31) ayant entre les dispositifs de palier (23) et en dehors des dispositifs de palier de l'extrémité (23') des pattes (26) sollicitées pour la précontrainte et/ou la force de rupture,
- l'ensemble piston/cylindre (25) agissant en commun avec les pattes par l'intermédiaire d'une broche pleine (30) sur le chapeau de palier (34) à séparer par rupture,
- les pattes (26) ayant des butées (35) rappelées de manière commandée contre les chapeaux de palier (34) pour les tenir de manière bloquée en rotation (figures 2, 3).

5. Dispositif selon l'une quelconque des revendications 1 à 4,
**caractérisé en ce que**
- la broche pleine (30) peut se positionner axialement à l'aide d'une butée (36), et
- lors de la séparation par rupture d'au moins un perçage de palier (27) des dispositifs de palier (23, 23') sont bloqués axialement à l'aide d'un support de serrage (figures 2, 3).

6. Dispositif selon l'une quelconque des revendications 1 à 5,
**caractérisé en ce que**
- la broche pleine (30) prévue pour séparer par rupture un nombre prédéterminé de chapeaux de palier (34) comporte dans sa zone périphérique du côté du chapeau de palier, un profil déterminé en fonction des chapeaux de palier (14) pour une séparation par rupture décalée dans le temps de certains chapeaux de palier,
- la broche pleine (30) étant bloquée axialement à l'aide de supports de serrage (piston hydraulique 37) agissant dans plusieurs perçages de palier (27) (figures 2, 3).

7. Dispositif selon l'une quelconque des revendications 1 à 3,
**caractérisé en ce que**
- l'installation de séparation par rupture (44) comporte une broche pleine (52) formée de segments mobiles radialement (55), et
- mobiles par rapport à des pattes d'appui (48) montées solidairement au bâti par rapport aux pattes de traction et de poussée (49) mobiles pour l'entraînement,
- un segment de broche pleine (54) coopérant avec les pattes d'appui respectives (48) pour recevoir la force de séparation par rupture dans chaque perçage de palier d'un dispositif de palier (43), dans la zone périphérique, diamétrale par rapport à un chapeau de palier (42) à séparer par rupture (figures 4, 5).

8. Dispositif selon la revendication 7,
**caractérisé en ce que**
- la broche pleine (52), assemblée comprend une broche de support (53) pour recevoir alternativement des manchons d'appui (54) centrés dans des pattes d'appui (48) et des manchons de séparation par rupture (55) centrés dans les pattes de traction/pression (49),
- les manchons de séparation par rupture (55) montés mobiles par rapport à la broche de support (53) dans le sens de la séparation par rupture, comportent des prolongements (55) en forme de demi-anneaux dirigés axialement, dans les dispositifs de palier voisins (43) pour agir sur les chapeaux de palier (42) à séparer par rupture, et
- dans la zone diamétrale par rapport à chaque chapeau de palier (42), dans le perçage de palier du dispositif de palier (43), vient en appui une saillie (54') annulaire, dirigée axialement du manchon d'appui (54) voisin, centré sur la broche de support (53) (figures 4, 5).

9. Dispositif selon l'une quelconque des revendications 7 et 8,
**caractérisé en ce que**
- un manchon de séparation par rupture (55) est guidé au moins par segment, frontalement par des manchons d'appui (54) reliés solidairement en rotation à la broche de support (53), dans le sens de la séparation par rupture,
- la broche pleine (52) assemblée, est bloquée en rotation par rapport à l'installation de séparation par rupture, et
- la patte de traction poussée (49) agissant sur le manchon de séparation par rupture (55) respectif par l'intermédiaire d'une base relativement large, est équipée de butées de blocage en rotation (56) qui s'appliquent de manière commandée contre les chapeaux de palier (42) des dispositifs de palier voisins (43) (figures 4, 5).

10. Dispositif selon l'une quelconque des revendications 1 à 9,
**caractérisé en ce que**
- le bâti comporte un logement réglable en hauteur par rapport à l'installation de séparation par rupture respective pour le carter de vilebrequin, l'installation de réglage par hauteur commandée par une installation d'ajustage servant à l'alignement des dispositifs de palier du carter de vilebrequin par rapport aux passages de broche dans les pattes de traction/poussée ou les éléments d'appui, pour permettre d'introduire la broche de séparation par rupture, respective sans qu'elle se grippe.

11. Dispositif selon l'une quelconque des revendications 1 à 10,
**caractérisé en ce que**
le bâti (32, 45) est mobile transversalement par rapport à des logements (39, 47) par rapport à l'installation de séparation par rupture pour le carter de vilebrequin (24, 44) (figure 4).

12. Dispositif selon l'une quelconque des revendications 1 à 11,
**caractérisé par**
l'utilisation de la séparation par rupture d'un ou plusieurs chapeaux de palier (34, 42) dans une combinaison fixe comprenant un châssis composé avec le chapeau de palier (38, 41).

13. Dispositif selon l'une quelconque des revendications 1 à 12,
**caractérisé par**
son application à des dispositifs de palier (5, 23, 43, 59) écartés pour la séparation par rupture par rapport aux chapeaux de palier (3, 34, 42, 60) avec des vis auxiliaires dont la section des tiges est le cas échéant diminuée.
